# EUROPÄISCHE PATENTSCHRIFT

(11) **EP 3 011 667 B1**
(45) Veröffentlichungstag und Bekanntmachung des Hinweises auf die Patenterteilung: **26.02.2020**
(21) Anmeldenummer: 14725477.5
(22) Anmeldetag: 22.05.2014
(51) Int. Cl.: H02M 1/14, H02M 3/158

(54) **VERFAHREN ZUM EINSTELLEN EINES GLEICHSTROMWANDLERS**
METHOD FOR ADJUSTING A DC-DC CONVERTER
PROCÉDÉ POUR AJUSTER UN CONVERTISSEUR DE COURANT CONTINU

(30) Priorität: 17.06.2013 DE 102013211264
(43) Veröffentlichungstag der Anmeldung: 27.04.2016
(73) Patentinhaber: Robert Bosch GmbH, 70442 Stuttgart (DE)
(72) Erfinder: DRAESE, Nils, 70469 Feuerbach (DE); SCHINZEL, Mirko, 70378 Stuttgart (DE)
(86) Internationale Anmeldenummer: PCT/EP2014/060516
(87) Internationale Veröffentlichungsnummer: WO 2014/202322

(56) Entgegenhaltungen:
- WO-A1-2010/009054
- DE-A1-102008 048 017
- US-A1- 2008 204 098
- REITER T ET AL: "Bus-voltage ripple optimization method for automotive multiphase DC/DC-converters", ENERGY CONVERSION CONGRESS AND EXPOSITION, 2009. ECCE. IEEE, IEEE, PISCATAWAY, NJ, USA, 20. September 2009 (2009-09-20), Seiten 2854-2861, XP031887509, DOI: 10.1109/ECCE.2009.5315979 ISBN: 978-1-4244-2893-9
- PERREAULT D J ET AL: "Switching-ripple-based current sharing for paralleled power converters", POWER CONVERSION CONFERENCE - NAGAOKA 1997., PROCEEDINGS OF THE NAGAOKA, JAPAN 3-6 AUG. 1997, NEW YORK, NY, USA,IEEE, US, Bd. 1, 3. August 1997 (1997-08-03), Seiten 473-478, XP010257352, DOI: 10.1109/PCCON.1997.645657 ISBN: 978-0-7803-3823-4

## Beschreibung

Die Erfindung betrifft ein Verfahren und eine Anordnung zum Einstellen eines Gleichstromwandlers.

### Stand der Technik

Ein Gleichstromwandler mit hoher Leistung kann mehrere kleine, zueinander parallel angeordnete und/oder geschaltete Einzelwandler aufweisen und somit als mehrphasiges System ausgebildet sein. Hierdurch können u. a. Belastungen von Bauteilen eines derartigen DC/DC-Wandlers gesenkt, die Qualität einer Ausgangsspannung verbessert, der Filteraufwand gesenkt und die Modularisierung hinsichtlich der zu verwendenden Bauteile erleichtert werden.

Allerdings kann es durch den elektrischen und mechanischen Aufbau des DC/DC-Wandlers, aufgrund von Toleranzen der verwendeten Bauteile und, durch mögliche interne und externe elektrische Schwingungen bedingt, in dem DC/DC-Wandler zu einer Unsymmetrie für eine Aufteilung eines Stroms und/oder von Lasten für einzelnen Phasen kommen, was zu verhindern ist. Hierzu kann in jeder Phase ein lediglich für diese Phase vorgesehenes Modul zur Strommessung eingebaut werden, wodurch die Bauteile jedoch aufwendiger zu konstruieren sind. Außerdem wird durch eine derartige Maßnahme die Verlustleistung gesteigert, wodurch wiederum der Wirkungsgrad gesenkt und der zur Kühlung erforderliche Aufwand erhöht wird.

Eine Schaltungsanordnung zur Erfassung eines Stroms in einem Schaltnetzteil sowie eine Vorrichtung zur Erfassung eines Spannungssignals sind aus der Druckschrift DE 44 22 399 A1 bekannt. Hierbei ist vorgesehen, dass das Schaltnetzteil eine Spule umfasst, die wiederum Bestandteil eines Wandlers ist. Die Vorrichtung ist zur Erfassung des Spannungssignals parallel zu einer Spule geschaltet.

Ein Verfahren zur Phasenverschränkung zur Erhöhung einer Effizienz von DC/DC-Wandlern ist aus der Druckschrift "Bus-Voltage Ripple Optimization Method for Automative Multiphase DC/DC-Converters" von Tomas Reiter et al. bekannt. Hierbei ist vorgesehen, dass der DC/DC-Wandler n Phasen umfasst, wobei Toleranzen in einer Phasenverschiebung ermittelt werden, um Unsymmetrien in dem DC/DC-Wandler zu identifizieren. Außerdem wird hier ein Ansatz verwendet, wonach eine erste Harmonische eines Phasenstroms über einen geschlossenen Regelkreis kontrolliert wird.

### Offenbarung der Erfindung

Vor diesem Hintergrund werden ein Verfahren und eine Anordnung mit den Merkmalen der unabhängigen Patentansprüche vorgestellt. Weitere Ausgestaltungen der Erfindung ergeben sich aus den abhängigen Patentansprüchen und der Beschreibung.

Das vorgestellte Verfahren und die vorgestellte Anordnung sind für einen mehrphasigen Gleichstromwandler (DC/DC Wandler) und somit einen Multiphasenwandler verwendbar. Dieser mehrphasige Gleichstromwandler umfasst als Komponenten mehrere kleinere, zueinander parallel angeordnete und/oder geschaltete Einzelwandler, die in der Regel baugleich ausgebildet sind, sowie einen Kondensator, der an einer Schnittstelle, d. h. entweder einem Eingang oder einem Ausgang, des Gleichstromwandlers angeordnet ist. Der Kondensator weist einen internen Widerstand, der auch als Serienwiderstand bezeichnet werden kann, auf, wobei der Kondensator und der Widerstand eine Reihenschaltung bilden. Mit diesem Gleichstromwandler können bei dessen Betrieb mehrere parallele Phasen zur Verfügung gestellt werden, wobei jede Phase von einem Einzelwandler bereitgestellt wird.

Bei einer möglichen Ausführungsform des Verfahrens kann durch Auswertung eines Spannungsripples einer Wechselspannung, die einer Gleichspannung überlagert ist, über der Reihenschaltung des als Ausgangskondensator oder Eingangskondensator ausgebildeten, an der Schnittstelle angeordneten

Kondensators, der als weitere Komponente des Gleichstromwandlers ausgebildet ist, eine Symmetrierung der Phasen des gesamten Gleichstromwandlers erreicht werden. Dasselbe gilt für eine Balancierurig und somit einen Ausgleich der vorgesehenen und/oder bereitgestellten Phasen des Gleichstromwandlers und eine Lastverteilung der Phasen.

Somit ergibt sich u. a., dass der Aufwand an bereitzustellenden Bauteilen und die daraus resultierende Kosten reduziert werden können. Außerdem können der für den Gleichstromwandler erforderlicher Bauraum und der damit verbundene Aufwand in der Entwicklung gesenkt werden.

Das Verfahren und die Anordnung können unabhängig von der Bauart und/oder Schaltungstopologie für unterschiedlich ausgebildete Gleichstromwandler mit mehreren Einzelwandlern verwendet und modular eingesetzt werden.

Hierbei ist in Ausgestaltung vorgesehen, zum Ermitteln der Ströme der einzelnen Phasen des Gleichstromwandlers den als Ausgangskondensator oder Eingangskondensator ausgebildeten Kondensator des Gleichstromwandlers zu verwenden, wobei dieser Kondensator je nach Definition auch als Komponente der Anordnung ausgebildet sein kann. Dieser Kondensator kann weiterhin zur Umsetzung von zumindest einer Grundfunktion des Gleichstromwandlers, bspw. zur Filterung und/oder Balancierung der Phasen sowie zur Lastverteilung, üblicherweise an den Einzelwandlern und/oder Phasen genutzt werden.

An der Reihenschaltung aus dem Kondensator und dessen internen Widerstand indirekt über Spannungen zu messende Ströme sind schneller und einfacher als Ströme mit hierfür extra erforderlichen Bauteilen zu erfassen. In weiterer Ausgestaltung werden aus den für die einzelnen Phasen gemessenen Spannungen die durch die Phasen fließenden Ströme abgeleitet. Hierbei wird die Formel: Q = C^{∗}U für den Kondensator verwendet, wobei Q die Ladung des Kondensators, C dessen Ladekapazität und U die an dem Kondensator anliegende Spannung ist. Zum Bestimmen des Stroms aus der Ladung Q ist diese nach der Zeit abzuleiten, wobei I = dQ/dt = C^{∗}dU/dt gilt. Demnach ist der Strom eines Einzelwandlers und somit einer Phase zur zeitlichen Ableitung seiner bzw. ihrer elektrischen Spannung proportional.

Da die verschiedenen Phasen des Gleichstromwandlers üblicherweise an dem Eingangs- und/oder Ausgangskondensator zusammen laufen, überlagern sich die Ströme der verschiedenen Phasen an diesem Kondensator. Dadurch steht für alle Phasen in der Regel nur ein gemeinsames Wechselsignal zur Verfügung, welches Aufschluss über die Symmetrie der Phasen geben kann. In diesem Fall wird über einen entsprechend konfigurierten Messverstärker der Gesamtripple der abfallenden Spannung für alle Einzelwandler am gemeinsamen Kondensator an der Schnittstelle des Gleichstromwandlers zu dessen Umgebung, z. B. über einen Messgleichrichter mit einem Tiefpass, am Ausgang oder am Eingang erfasst. Da der Punkt einer optimalen Symmetrie der Phasen mit einem Minimum einer Stromwelligkeit einhergeht, kann durch empirische Vertrimmung der einzelnen Phasen bei gleichzeitiger Auswertung der Stromwelligkeit ein Optimum angelernt werden. Eine Symmetrisierung der Phasen ist durch Reduktion der Amplitude der Spannung von mindestens einem Einzelwandler, in der Regel des Einzelwandlers mit der größten Amplitude zu erreichen. Dabei ist die Amplitude der Spannung des mindestens einen Einzelwandlers durch Verändern einer Einschaltdauer, während der dieser mindestens eine Einzelwandler anzusteuern und/oder zu aktivieren ist, zu erreichen. Da diese Funktion zum einen zu einem Großteil in Software realisiert werden kann, und diese Software auch nur verhältnismäßig selten ausgeführt werden muss, ist der Lösungsansatz mit einem geringen Ressourcenaufwand verbunden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen
- Figur 1a: zeigt in schematischer Darstellung eine erste Ausführungsform der Anordnung sowie ein Beispiel für einen Gleichstromwandler in schematischer Darstellung.
- Figur 1b: zeigt in schematischer Darstellung eine zweite Ausführungsform der Anordnung sowie den Gleichstromwandler aus Figur 1 in schematischer Darstellung.
- Figur 2: zeigt Diagramme zu einer Ausführungsform des Verfahrens.
- Figur 3: zeigt weitere Diagramme zu der Ausführungsform des Verfahrens.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

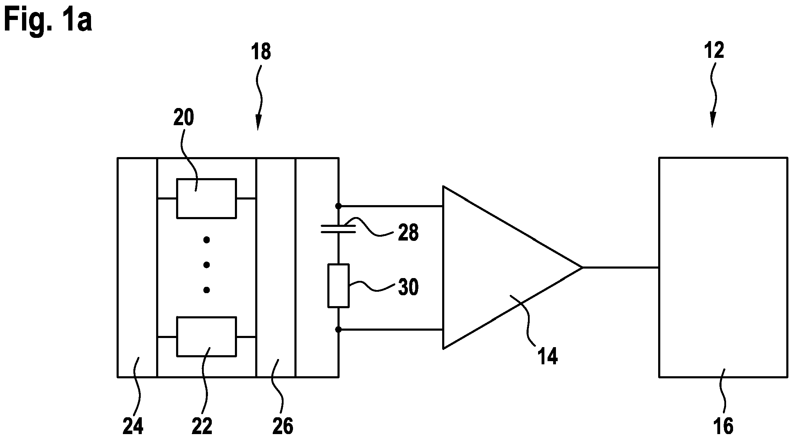

Figur 1a zeigt neben einer Ausführungsform der Anordnung 12, die einen Messverstärker 14 und ein Steuergerät 16 zur Kontrolle einer Ausführungsform des Verfahrens umfasst, ein Beispiel für einen mehrphasigen Gleichstromwandler 18.

Dieser Gleichstromwandler 18 umfasst mehrere zueinander parallel geschaltete Einzelwandler 20, 22, wobei in Figur 1a lediglich zwei dieser mindestens zwei Einzelwandler 20, 22 dargestellt sind. Außerdem umfasst der Gleichstromwandler 18 hier zwei elektronische Bauteile 24, 26, wobei ein erstes elektronisches Bauteil 24 den zueinander parallel angeordneten Einzelwandlern 20, 22 vorgeschaltet und ein zweites elektronisches Bauteil 26 den zueinander parallel angeordneten Einzelwandlern 20, 22 nachgeschaltet ist. Dabei umfasst jedes dieser elektronischen Bauteile 24, 26 mindestens ein nicht weiter dargestelltes elektronisches Element.

In Figur 1a ist zudem ein Kondensator 28 als weitere Komponente des mehrphasigen Gleichstromwandlers 18 dargestellt, der hier mit einem als Ersatzserienwiderstand ausgebildeten internen Widerstand 30 eine Reihenschaltung bildet. Dieser Kondensator 28 ist an einer Schnittstelle, d. h. einem Eingang oder einem Ausgang, zu einer Umgebung des Gleichstromwandlers 18 angeordnet und demnach entweder als Eingangskondensator oder als Ausgangskondensator ausgebildet. Parallel zu dem Kondensator 28 und dem Widerstand 30 ist der Messverstärker 14 der Anordnung 12 geschaltet.

Jeder Einzelwandler 20, 22 des mehrphasigen Gleichstromwandlers 18 ist dazu ausgebildet, einen einphasigen Strom bereitzustellen. Mindestens eines der beiden elektronischen Bauteile 24, 26 ist dazu ausgebildet, eine Schaltfunktion durchzuführen. Ein Betrieb des Gleichstromwandlers 18 ist durch das mindestens eine elektronische Bauteil 24, 26 zum Durchführen der Schaltfunktion zu kontrollieren. Hierbei werden die einzelnen Einzelwandler 20, 22 von diesem mindestens einen elektronischen Bauteil 24, 26 mit einem definierten zeitlichen Versatz nacheinander angesteuert und/oder aktiviert, wobei jeder Einzelwandler 20, 22 während einer für diesen vorgesehenen, individuellen Einschaltdauer angesteuert und/oder aktiviert wird. Außerdem werden sämtliche Einzelwandler 20, 22 durch das mindestens eine elektronische Bauteil 24, 26 einer Reihenfolge entsprechend nacheinander angesteuert und/oder aktiviert. Ein von dem mehrphasigen Gleichstromwandler 18 insgesamt bereitgestellter Strom entspricht einer Überlagerung der sich der Reihenfolge nach abwechselnden Ströme und/oder Phasen der mehreren Einzelwandler 20, 22.

Das Steuergerät 16 ist zudem dazu ausgebildet, den mehrphasigen Gleichstromwandler 18 und somit eine Funktion von mindestens einer Komponente dieses Gleichstromwandlers 18, nämlich mindestens eines Einzelwandlers 20, 22 und/oder mindestens eines elektronischen Bauteils 24, 26 zum Steuern und/oder zum Freischalten gemäß der vorgesehen Reihenfolge, zu kontrollieren und somit zu steuern und/oder zu regeln.

Der von dem Gleichstromwandler 18 bereitgestellte Strom, d. h. die Überlagerung der aufeinanderfolgend bereitgestellten Ströme sämtlicher Einzelwandler 20, 22, fließt durch den Kondensator 28. Demnach fließt aufgrund einer Ansteuerung durch das mindestens eine elektronische Bauteil 24, 26 durch den Kondensator 28 jeweils die Überlagerung der Ströme der Einzelwandler 20, 22.

Je nach Art und Topologie des Gleichstromwandlers 18 weist dieser in Ausgestaltung zwei Schnittstellen, nämlich einen Eingang und einen Ausgang, mit jeweils einem Kondensator 28 zur Signalglättung und Energiespeicherung auf.

In der beschriebenen Ausführungsform wird ein Stromfluss in dem Kondensator 28 überwacht, wobei über den Kondensator 28 der Stromfluss der einzelnen Phasen geschaltet wird. Hierbei wird der zu überwachende Kondensator 28 ausgewählt, an dem durch das Zu- und Wegschalten der Ströme der Phasen ein Wechselstrom anliegt, aus dem ein Rückschluss auf die Ströme der Phasen der einzelnen Phasen und somit der Einzelwandler 20, 22 gezogen wird.

Aufgrund des von dem Gleichstromwandler 18 und somit von den Einzelwandlern 20, 22 bereitgestellten, fließenden Stroms liegt an dem Widerstand 30, d. h. dem internen Ersatzserienwiderstand (ESR), der mit dem Kondensator 28 in Reihe geschaltet ist, eine Spannung an, wobei der fließende Strom einen Spannungsabfall verursachen kann. Dabei kann ein Wert der an dem Kondensator 28 anliegenden und/oder abfallenden Spannung mit dem üblicherweise schnellen Messverstärker 14, der zu dem Kondensator 28 und dem Widerstand 30 parallel geschaltet ist, erfasst und dem Steuergerät 16 als Kontrolleinheit (Controller) zugeführt werden. Der Messverstärker 14 ist dazu ausgebildet, dass der Kontrolleinheit eine Höhe eines Wechselanteils im Signal der Ströme zugeführt wird. Ein Gleichanteil der am Kondensator 28 anliegenden Spannung ist im Messverstärker 14 aus dem Signal herauszufiltern.

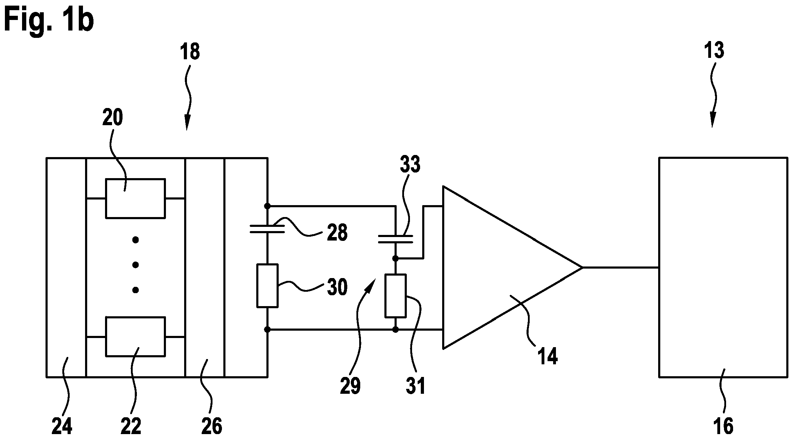

Figur 1b zeigt in schematischer Darstellung eine zweite Ausführungsform der Anordnung 13 mit demselben Steuergerät 16, demselben Messverstärker 14 und demselben Gleichstromwandler 18 wie in Figur 1a.

Dabei umfasst die Anordnung 13 eine weitere Ausgestaltung einer Messschaltung, bei der zu dem eigentlichen Kondensator 28 an der Schnittstelle des Gleichstromwandlers 18 ein RC-Filter 29 als externer Hochpass mit einem Messwiderstand 31 und einem Messkondensator 33 parallel geschaltet ist, wobei der RC-Filter 29 mit dem Messverstärker 14 verbunden ist. Durch die Auswertung eines Spannungsabfalls am Messwiderstand 31 dieses RC-Filters 29, wird ein Wechselanteil des Stroms am Kondensator 28 direkt erfasst.

In den hier vorgestellten Ausführungsformen ist vorgesehen, dass der Gleichstromwandler 18 sechs Einzelwandler 20, 22 aufweist und folglich als sechsphasiger Gleichstromwandler 18 ausgebildet ist.

Bei einer Durchführung des Verfahrens wird die an der Reihenschaltung aus dem Kondensator 28 und dem Widerstand 30 anliegende Spannung gemessen. Dabei werden die Höhen der Amplituden der Spannung sämtlicher Einzelwandler 20, 22 und somit sämtlicher Phasen analysiert und miteinander verglichen. Dabei wird weiterhin ermittelt, welche Amplitude von welchem Einzelwandler 20, 22 einen maximalen Wert aufweist. Für diesen Einzelwandler 20, 22 wird die vorgesehene Einschaltdauer variiert, bis der Wert der Amplitude reduziert wird. Entsprechend kann für mindestens einen weiteren Einzelwandler 20, 22, üblicherweise für jenen weiteren Einzelwandler 20, 22 mit der maximalen Amplitude die Einschaltdauer verändert und somit dessen Amplitude reduziert werden. Es ist möglich, sämtliche Phasen sämtlicher Einzelwandler 20, 22 allein durch Reduktion der Amplitude jenes Einzelwandlers 20, 22 mit der maximalen Amplitude zu symmetriesieren und/oder anzugleichen, da sich eine Reduktion der maximalen Amplitude auch auf eine Höhe der anderen Amplituden auswirkt.

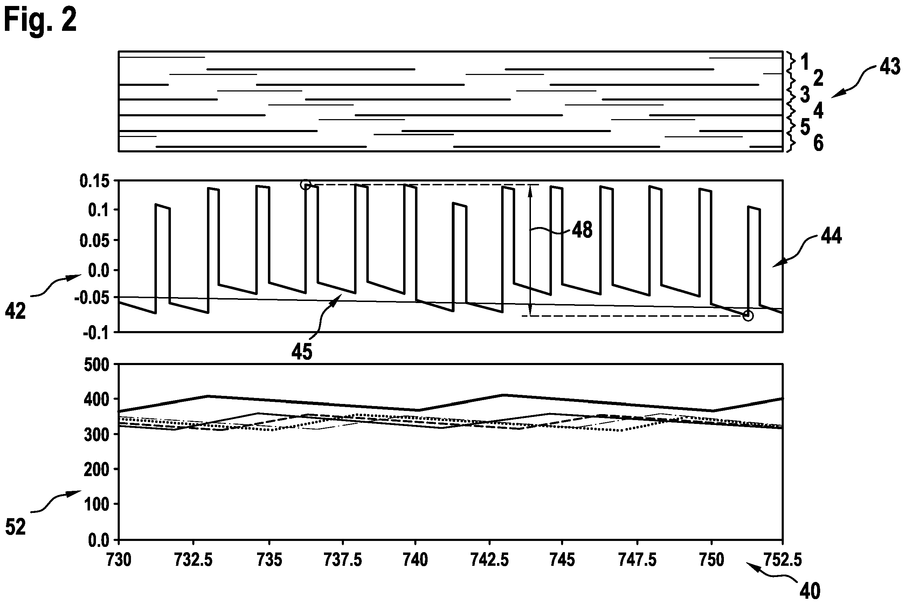

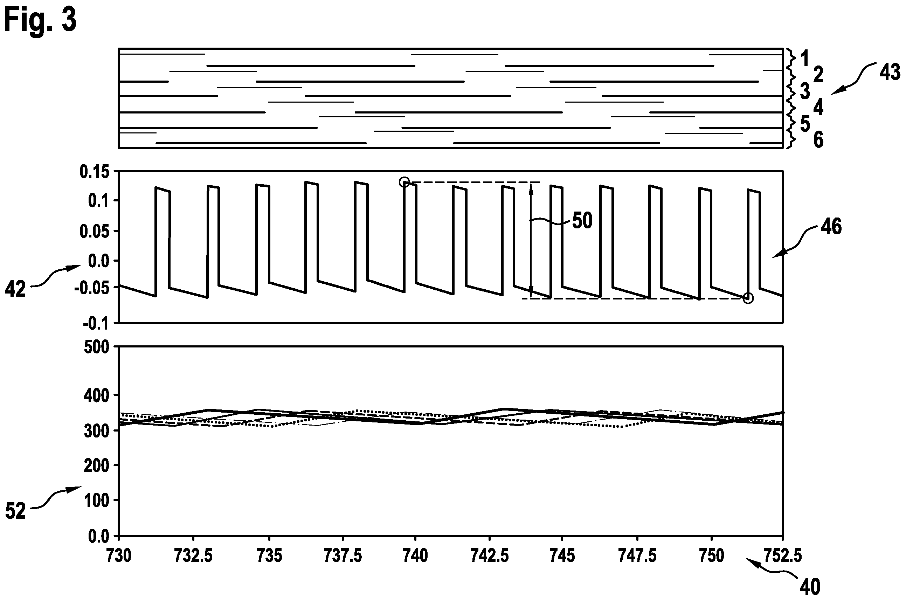

In den beiden Figuren 2 und 3 sind jeweils drei Diagramme dargestellt, die eine gemeinsame Abszisse 40 umfassen, entlang der die Zeit in Mikrosekunden aufgetragen ist. Entlang einer Ordinate 43 eines ersten Diagramms (oben) sind jeweils Betriebszustände 1, 2, 3, 4, 5, 6 von insgesamt sechs Einzelwandlern eines Gleichstromwandlers, für den die Ausführungsform des Verfahrens durchzuführen ist dargestellt, nämlich ein erster Betriebszustand 1 für einen ersten Einzelwandler, ein zweiter Betriebszustand 2 für einen zweiten Einzelwandler, ein dritter Betriebszustand 3 für einen dritten Einzelwandler, ein vierter Betriebszustand 4 für einen vierten Einzelwandler, ein fünfter Betriebszustand 5 für einen fünften Einzelwandler und ein sechster Betriebszustand 6 für einen sechsten Einzelwandler. Dabei ist vorgesehen, dass jeder Einzelwandler zu einem Zeitpunkt entweder eingeschaltet oder ausgeschaltet ist, was durch die zur Abszisse 40 parallel angeordneten, wechselseitig unterbrochenen Linien symbolisiert ist. Ist einer der Einzelwandler während einer für ihn vorgesehenen Einschaltdauer aktiviert und/oder eingeschaltet, weist dessen Betriebszustand 1, 2, 3, 4, 5, 6 einen Maximalwert (logische Eins) auf. Falls der Einzelwandler ausgeschaltet ist, weist dessen Betriebszustand 1, 2, 3, 4, 5, 6 einen Minimalwert (logische Null) auf.

Entlang einer Ordinate 42 des jeweils zweiten Diagramms in der Mitte ist eine elektrische Spannung in Volt aufgetragen ist.

In dem zweiten Diagramm aus Figur 2 ist beispielhaft ein Verlauf 44 zur Darstellung eines Signals einer Spannung des sechsphasigen Gleichstromwandlers 18 dargestellt. Dabei liegt an dem internen Widerstand 30, üblicherweise einem Ersatzwiderstand, des Kondensators 28 und/oder am direkt zugänglichen Messwiderstand 31 in der Figur 1b ein Signal für eine Spannung an, das einer Überlagerung des Wechselanteils der Teilströme der einzelnen Einzelwandler 20, 22 entspricht. Der in Figur 2 dargestellte Verlauf 44 des Signals für die Spannung zeigt den Verlauf 44 des Wechselanteils am Kondensator 28.

Der Verlauf 44 zeigt, dass die summierten Wechselanteile der Einzelwandler 20, 22, aus denen eine gesamte Spannung des Gleichstromwandlers 18 resultiert, ungleichmäßig hohe Amplituden, d. h. Spitze-zu-Spitze-Werte aufweisen, woraus eine ungleiche Lastverteilung der sechs Einzelwandler 20, 22 und somit der sechs Phasen resultiert. Anhand der unterschiedlichen Höhen der Amplituden im zeitlichen Verlauf des Signals kann direkt darauf geschlossen werden, dass die Lastverteilung der einzelnen Einzelwandler 20, 22 unsymmetrisch ist.

Die unsymmetrischen Phasen können durch unterschiedliche Maßnahmen identifiziert werden. Bei einer ersten Maßnahme wird über den zeitlichen Verlauf 44 des Signals direkt auf eine unsymmetrische Phase geschlossen. Hierzu wird das Signal über das Steuergerät 16 zyklisch mit einer hohen Abtastrate gemessen. Durch Analyse des Verlaufs 44 kann ein zeitlicher Mittelwert bestimmt und der Zeitpunkt gesucht werden, zu dem die größte Abweichung, d. h. maximale Amplitude, zu dem zeitlichen Mittelwert besteht. Da das Steuergerät 16 üblicherweise direkt für die Erzeugung von Ansteuersignalen für die Einzelwandler 20, 22 ausgebildet ist oder zumindest Informationen zu Ansteuersignalen bereitstellt, kann durch die Verknüpfung der Informationen aus dem zeitlichen Verlauf 44 des gemessenen Signals und dem zeitlichen Verlauf 44 des Signals der Einzelwandler 20, 22 die unsymmetrische Phase identifiziert werden.

In dem beispielhaft dargestellten Verlauf 44 tritt ein minimaler Wert zu einem Zeitpunkt auf, an dem ein erster Einzelwandler 20, 22 aktiv angesteuert wird. Folglich ist der erste Einzelwandler 20, 22 hier der unsymmetrische Einzelwandler 20, 22. Da der Verlauf 44 eine negative Abweichung gegenüber dem Mittelwert aufweist, entnimmt der erste Einzelwandler 20, 22 einen zu hohen Strom aus dem Kondensator 28, weshalb eine Ansteuerdauer des Einzelwandlers 20, 22 reduziert wird, um eine symmetrische Lastverteilung der Einzelwandler 20, 22 zu erzielen.

Außerdem ist in dem zweiten Diagramm aus Figur 2 ein Wert für eine maximale Amplitude 48 zwischen einem minimalen Wert und einem maximalen Wert für die Spannung angedeutet.

Durch Anpassung der Ansteuerdauer bzw. Einschaltdauer des ersten Einzelwandlers 20, 22 und durch periodische Erfassung und Analyse des Verlaufs 44 wird eine Auswirkung der Anpassung überprüft und durch wiederholtes Anpassen und Messen ein Optimum der Symmetrie eingeregelt. Dieser daraus resultierende optimale Verlauf 46 ist beispielhaft in dem zweiten Diagramm aus Figur 3 dargestellt.

Da die kontinuierliche Abtastung des Verlaufs 44 eine hohe Anforderung an das Steuergerät 16 stellt, kann über einen speziellen Analog zu Digitalwandler, auch ein variabler Grenzwert 45 eingestellt werden, bei dessen Unterschreitung dem Steuergerät 16 automatisch der Zeitpunkt der Unterschreitung gemeldet wird. Aus diesem Zeitpunkt kann ebenfalls der unsymmetrische Einzelwandler 20, 22 ermittelt werden. Die Höhe des zu stellenden Grenzwerts 45 kann dabei im Betrieb empirisch bestimmt werden.

Bei einer dritten möglichen Maßnahme zur Realisierung des Verfahrens wird lediglich die maximale Amplitude 48 des Verlaufs 44 überwacht und versucht, diese zu minimieren. Hierfür kann der Verlauf 44 zum Beispiel über einen Messgleichrichter mit nachgeschaltetem Tiefpass direkt in einen Signalpegel konvertiert werden, der einen Aufschluss über den Grad der Symmetrie aller Einzelwandler 20, 22 gibt. Daraus resultiert die nunmehr reduzierte Amplitude 50 im optimalen Verlauf, wie im zweiten Diagramm aus Figur 3 angedeutet.

Das Steuergerät 16 ist im folgenden dazu ausgebildet, im Rahmen des Verfahrens systematisch für jeden Einzelwandler 20, 22 einen Wert einer Einschaltdauer und/oder Ansteuerdauer und somit eine Phase des jeweiligen Einzelwandlers 20, 22 in kleinen Schritten empirisch zu verändern, wobei eine Periode eines Stroms, der durch jeweils einen Einzelwandler 20, 22 fließt, durch Anpassen der Werte so lange verändert wird, bis der Pegel des Signals ein Minimum erreicht.

Außerdem umfasst sowohl Figur 2 als auch Figur 3 ein drittes Diagramm (unten) mit einer Ordinate 52, entlang der eine Stromstärke in Ampere aufgetragen ist. In den beiden dritten Diagrammen sind Verläufe des Stroms der sechs Einzelwandler 20, 22 dargestellt.

In Ausgestaltung des Verfahrens wird die Einschaltdauer des Einzelwandlers 20, 22 mit der maximalen Amplitude 48 verändert, wobei diese maximale Amplitude 48 reduziert und für den Einzelwandler 20, 22 die reduzierte Amplitude 50 bereitgestellt wird. Dadurch werden weiterhin die Amplituden der Phasen sämtlicher weiterer Einzelwandler 20, 22 ausgeglichen und somit symmetrisiert.

Hierbei kann zum Beispiel in einem ersten Schritt für den ersten Einzelwandler 20, 22 die Einschalt- und/oder Ansteuerdauer erhöht werden. Wenige Perioden später wird eine Amplitude des Verlaufs 44 des Signals vom Steuergerät 16 analysiert und bestimmt, ob eine Reduktion der Amplitude des Signals erzielt wurde. Wurde eine Reduktion erreicht, wird die Anpassung der Ansteuerdauer beibehalten. Falls keine Reduktion erzielt wurde, wird in einem zweiten Schritt die Ansteuerdauer des ersten Einzelwandlers 20, 22 reduziert und die Auswertung wiederholt. Wurde eine Reduktion erreicht, wird die Anpassung der Ansteuerdauer beibehalten. Diese empirische Anpassung der Werte der Ansteuer- und/oder Einschaltdauer der Einzelwandler 20, 22 wird zyklisch nacheinander bei allen Einzelwandlern 20, 22 durchgeführt. Über spezielle Optimierungsalgorithmen kann das Verfahren gegebenenfalls noch weiter optimiert werden.

Hierzu wird auf das zweite Diagramm aus Figur 3 verwiesen, das einen Verlauf 46 für ein Signal einer modifizierten Spannung des mehrphasigen Gleichstromwandlers 18 und somit einzelner, im Rahmen des Verfahrens angepasster Werte für die Ansteuerdauer der sechs Phasen zeigt, die aus der Überlagerung der modifizierten Ströme der Einzelwandler 20, 22 resultieren.

Die Amplituden der überlagerten Ströme der Einzelwandler 20, 22 sind hier gleich hoch. Dementsprechend sind die Spitze-zu-Spitze-Werte im Verlauf 46 des Signals minimiert und die Phasen, d. h. die von den Einzelwandlern 20, 22 bereitgestellten Ströme, symmetrisiert.

Durch Erfassen eines Signals der Spannung des hier als Sechsphasen-Wandler ausgebildeten mehrphasigen Gleichstromwandlers 18 kann jede Spannung eines Einzelwandlers 20, 22 unabhängig davon, ob diese nun angepasst ist oder nicht, individuell erfasst werden. Bei einer direkten Strommessung kann dagegen nur ein mittlerer Gesamtstrom erfasst werden, wobei zwischen individuell fließenden Strömen einzelner Einzelwandler 20, 22 nicht unterschieden werden kann.

Bei dem Verfahren zum Einstellen eines mehrphasigen Gleichstromwandlers 18, der mindestens zwei, d. h. mehrere Einzelwandler 20, 22 sowie einen als Eingangs- oder Ausgangskondensator ausgebildeten Kondensator 28 mit einem internen Widerstand 30 umfasst, wird von jeweils einem Einzelwandler 20, 22 einer Reihenfolge entsprechend ein Strom bereitgestellt. Daraus resultiert, dass durch eine Reihenschaltung aus dem Kondensator 28 und dem Widerstand 30 ein Strom fließt, der sich aus der Überlagerung der jeweiligen Ströme der Einzelwandler 20, 22 zusammensetzt. Außerdem entsteht an der Reihenschaltung des Kondensators 28 ein Abfall einer Spannung, der aus der Überlagerung der Einzelströme der Einzelwandler 20, 22 resultiert und gemessen wird.

In Ausgestaltung wird aus der Überlagerung der individuellen Ströme der Einzelwandler ein summiertes Signal, das hier anhand der Verläufe 44, 46 in den zweiten Diagrammen der Figuren 2 und 3 dargestellt ist, generiert, dessen Verlauf 44, 46 eine Aussage über den Grad der Stromunsymmetrie der einzelnen Phasen und somit Einzelwandler 20, 22 zueinander ermöglicht.

Die Einzelwandler 20, 22 werden der Reihenfolge entsprechend nacheinander angesteuert und somit aktiviert, wobei jeder Einzelwandler 20, 22 während einer Einschaltdauer eingeschaltet wird. Aus einer Einschaltdauer für jeweils einen Einzelwandler 20, 22 resultiert eine Periode, während der durch den Kondensator 28 ein Strom fliesst, der zu einer Änderung einer Spannung an dem Kondensator 28 führt. Diese Änderung der Spannung wird zum einen durch die Ladungsänderung des Kondensators 28 und zum anderen durch einen Abfall der Spannung am internen Widerstand 30 des Kondensators 28 hervorgerufen.

In Ausgestaltung können Werte für die Einschaltdauer und demnach Einschaltlängen der Einzelwandler 20, 22 verändert, bspw. verkürzt oder verlängert werden, wodurch die Höhe der Amplituden des Verlaufs 44, 46 des Signals verändert werden. In dieser Ausgestaltung können die Werte für die Einschaltdauer durch einen Algorithmus durch Ansteuerung und/oder Aktivierung verändert werden, wodurch die Amplitude des Verlaufs 44, 46 des Signals auf ein Minimum reduziert wird. In der Regel wird hierbei die Einschaltdauer des Einzelwandlers 20, 22 mit der maximalen Amplitude 48 verändert und dabei diese maximale Amplitude 48 auf die reduzierte Amplitude 50 verringert. Diese Maßnahme wirkt sich auch auf die Amplituden der anderen Einzelwandler 20, 22 aus. Insgesamt werden sämtliche Amplituden ausgeglichen und somit symmetrisiert.

Die Anordnung 12, 13 zum Einstellen des mehrphasigen Gleichstromwandlers 18 umfasst das Steuergerät 16, das dazu ausgebildet ist, den Verlauf 44, 46 des Signals am Ausgangs- oder Eingangskondensator zu messen und aus dem Verlauf 44, 46 des Signals einen Rückschluss auf den Grad der Unsymmetrie der Einzelwandler 20, 22 zueinander abzuleiten. Dabei entsteht an der Reihenschaltung des Kondensators 28 und des internen Widerstands 30 ein Abfall einer Spannung, der aus der Überlagerung der Einzelströme der Einzelwandler 20, 22 resultiert. Das Steuergerät 18 der Anordnung 12 ist dazu ausgebildet, die an dem Widerstand 30 anliegende Spannung zu messen. Hierbei kann die Spannung, üblicherweise eine Amplitude 48, 50 der Spannung, für jeden Einzelwandler 20, 22 individuell gemessen werden.

Die Anordnung 12, 13 kann einen Messverstärker 14 aufweisen, der parallel zu dem Kondensator 28 und dem Widerstand 30 geschaltet und mit dem Steuergerät 16 verbunden ist. Bei Durchführung des Verfahrens wird der von dem Messverstärker 14 verstärkte Wechselanteil der Spannung am Kondensator 28, der aus der Überlagerung der einzelnen Teilströme der Einzelwandler 20, 22 resultiert, erfasst sowie ausgewertet und/oder analysiert.

Das Steuergerät 16 ist weiterhin dazu ausgebildet, das Einstellen und den Betrieb des mehrphasigen Gleichstromwandlers 18 zu kontrollieren und dabei jeweils einen der Einzelwandler 20, 22 durch Ansteuern während einer für den Einzelwandler 20, 22 vorgesehenen Einschaltdauer zu aktivieren, bspw. durch Ansteuern von mindestens einem elektronischen Bauteil 24, 26 mittelbar bzw. indirekt zu aktivieren.

## Patentansprüche

1. Verfahren zum Einstellen eines mehrphasigen Gleichstromwandlers (18), der mindestens zwei Einzelwandler (20, 22) sowie an einer Schnittstelle einen Kondensator (28) mit einem internen Widerstand (30), die beide in einer Reihenschaltung geschaltet sind, umfasst, wobei von jeweils einem Einzelwandler (20, 22) einer Reihenfolge entsprechend ein Strom bereitgestellt wird, der durch den Kondensator (28) und den Widerstand (30) fließt, wobei an der Reihenschaltung ein Abfall einer Spannung entsteht und gemessen wird, wobei der Abfall aus der Überlagerung der Einzelströme der Einzelwandler (20, 22) resultiert, wobei die Einzelwandler (20, 22) der Reihenfolge entsprechend nacheinander angesteuert werden, wobei jeder Einzelwandler (20, 22) während einer Einschaltdauer eingeschaltet wird, wobei aus einer Einschaltdauer für jeweils einen Einzelwandler (20, 22) eine Periode resultiert, während der durch einen Stromfluss eines Einzelwandlers (20, 22) an dem für alle Einzelwandler (20, 22) gemeinsamen Kondensator (28) der Abfall der Spannung erzeugt wird, wobei ein Wechselanteil der Spannung am Kondensator (28), der aus der Überlagerung der einzelnen Teilströme der Einzelwandler (20, 22) resultiert, von einem Messverstärker (14), der parallel zu dem Kondensator (28) und dem Widerstand (30) geschaltet ist, verstärkt und erfasst wird, wobei in einem Verlauf (44) eines Wechselanteils der Spannung am Kondensator (28) ein minimaler Wert zu einem Zeitpunkt auftritt, an dem ein erster Einzelwandler (20, 22) aktiv angesteuert wird, wobei die Ansteuerdauer des ersten Einzelwandlers (20, 22) derart angepasst wird, dass durch Verändern der Einschaltdauer des ersten Einzelwandlers (20, 22) die Höhen der Amplituden (48, 50) der Spannung aller Einzelwandler (20, 22) ausgeglichen werden.

2. Verfahren nach Anspruch 1, bei dem für jeden Einzelwandler (20, 22) eine Höhe einer Amplitude der resultierenden Spannung gemessen wird, und wobei Höhen der Amplituden von Spannungen sämtlicher Einzelwandler (20, 22) verglichen werden.

3. Verfahren nach Anspruch 1, bei dem für mindestens einen Einzelwandler (20, 22) ein Wert für eine Einschaltdauer verändert wird, wodurch eine Amplitude der Spannung für den mindestens einen Einzelwandler (20, 22) verändert wird.

4. Verfahren nach Anspruch 3, bei dem für einen Einzelwandler (20, 22), dessen Amplitude (48) der Spannung den höchsten Wert aufweist, diese Amplitude (48) durch Verändern der Einschaltdauer reduziert wird.

5. Verfahren nach einem der voranstehenden Ansprüche, das für einen Gleichstromwandler (18) durchgeführt wird, bei dem der Kondensator (28) als Eingangskondensator oder als Ausgangskondensator ausgebildet ist.

6. Anordnung zum Einstellen eines mehrphasigen Gleichstromwandlers (18), der mindestens zwei Einzelwandler (20, 22) sowie einen Kondensator (28) und einen Widerstand (30), die beide in einer Reihenschaltung geschaltet sind, umfasst, wobei von jeweils einem Einzelwandler (20, 22) einer Reihenfolge entsprechend ein Strom bereitzustellen ist, der durch den Kondensator (28) und den Widerstand (30) fließt, wobei an der Reihenschaltung ein Abfall einer Spannung entsteht, der aus der Überlagerung der Einzelströme der Einzelwandler (20, 22) resultiert, wobei die Anordnung (12, 13) ein Steuergerät (16) und einen Messverstärker (14) aufweist, wobei das Steuergerät (16) dazu ausgebildet ist, die resultierende Spannung zu messen, wobei die Einzelwandler (20, 22) der Reihenfolge entsprechend nacheinander angesteuert werden, wobei der Messverstärker (14) dazu ausgelegt ist, parallel zu dem Kondensator (28) und dem Widerstand (30) geschaltet zu werden und dazu ausgebildet ist, einen Wechselanteil der Spannung am Kondensator (28), der aus der Überlagerung der einzelnen Teilströme der Einzelwandler (20, 22) resultiert, zu verstärken, wobei jeder Einzelwandler (20, 22) während einer Einschaltdauer einzuschalten ist, wobei aus einer Einschaltdauer für jeweils einen Einzelwandler (20, 22) eine Periode resultiert, während der durch einen Stromfluss eines Einzelwandlers (20, 22) an dem für alle Einzelwandler (20, 22) gemeinsamen Kondensator (28) der Abfall der Spannung erzeugt wird, wobei in einem Verlauf (44) eines Wechselanteils der Spannung am Kondensator (28) ein minimaler Wert zu einem Zeitpunkt auftritt, an dem ein erster Einzelwandler (20, 22) aktiv angesteuert wird, wobei die Ansteuerdauer des ersten Einzelwandlers (20, 22) derart angepasst wird, dass durch Verändern der Einschaltdauer des ersten Einzelwandlers (20, 22) die Höhen der Amplituden (48, 50) der Spannung aller Einzelwandler (20, 22) ausgeglichen werden.

7. Anordnung nach Anspruch 6, die als Messschaltung einen RC-Filter (29) aufweist, der parallel zu dem Kondensator (28) und dem Widerstand (30) geschaltet ist.

8. Anordnung nach einem der Ansprüche 6 bis 7, bei dem das Steuergerät (16) dazu ausgebildet ist, einen Betrieb des mehrphasigen Gleichstromwandlers (18) zu kontrollieren und dabei jeweils einen der Einzelwandler (20, 22) durch Ansteuern von mindestens einem elektronische Bauteil (24, 26) zu aktivieren.

## Claims

1. Method for adjusting a polyphase DC/DC converter (18), which comprises at least two individual converters (20, 22) and, at an interface, a capacitor (28) with an internal resistor (30), which are both connected in a series circuit, wherein a current is provided by each individual converter (20, 22) in accordance with a sequence, said current flowing through the capacitor (28) and the resistor (30), wherein a voltage is dropped at the series circuit and is measured, wherein the drop results from the superposition of the individual currents of the individual converters (20, 22), wherein the individual converters (20, 22) are actuated successively in accordance with the sequence, wherein each individual converter (20, 22) is switched on during a switch-on duration; wherein a period results from a switch-on duration for each individual converter (20, 22), during which period the voltage drop is produced at the capacitor (28) common to all individual converters (20, 22) by way of a current flow of an individual converter (20, 22), wherein an AC component of the voltage at the capacitor (28), which results from the superposition of the individual partial currents of the individual converters (20, 22), is amplified by a measurement amplifier (14), which is connected in parallel with the capacitor (28) and the resistor (30), and is detected, wherein, in a profile (44) of an AC component of the voltage at the capacitor (28), a minimum value arises at a time at which a first individual converter (20, 22) is actively actuated, wherein the actuation duration of the first individual converter (20, 22) is adjusted in such a way that the heights of the amplitudes (48, 50) of the voltage of all of the individual converters (20, 22) are balanced by changing the switch-on duration of the first individual converter (20, 22).

2. Method according to Claim 1, in which a height of an amplitude of the resulting voltage is measured for each individual converter (20, 22), and wherein heights of the amplitudes of voltages of all of the individual converters (20, 22) are compared.

3. Method according to Claim 1, in which a value for a switch-on duration is changed for at least one individual converter (20, 22), as a result of which an amplitude of the voltage is changed for the at least one individual converter (20, 22).

4. Method according to Claim 3, in which, for an individual converter (20, 22) whose amplitude (48) of the voltage has the highest value, said amplitude (48) is reduced by changing the switch-on duration.

5. Method according to one of the preceding claims, which is carried out for a DC/DC converter (18), in which- the capacitor (28) is formed as an input capacitor or as an output capacitor.

6. Arrangement for adjusting a polyphase DC/DC converter (18), which comprises at least two individual converters (20, 22) and a capacitor (28) and a resistor (30), which are both connected in a series circuit, wherein a current is to be provided by each individual converter (20, 22) in accordance with a sequence, said current flowing through the capacitor (28) and the resistor (30), wherein a voltage is dropped at the series circuit, which results from the superposition of the individual currents of the individual converters (20, 22), wherein the arrangement (12, 13) has a control unit (16) and a measurement amplifier (14), wherein the control unit (16) is designed to measure the resulting voltage, wherein the individual converters (20, 22) are actuated successively in accordance with the sequence, wherein the measurement amplifier (14) is designed to be connected in parallel with the capacitor (28) and with the resistor (30) and is designed to amplify an AC component of the voltage at the capacitor (28), which results from the superposition of the individual partial currents of the individual converters (20, 22), wherein each individual converter (20, 22) is to be switched on during a switch-on duration, wherein a period results from a switch-on duration for each individual converter (20, 22), during which period the voltage drop is produced at the capacitor (28) common to all of the individual converters (20, 22) due to a current flow of an individual converter (20, 22), wherein, in a profile (44) of an AC component of the voltage at the capacitor (28), a minimum value arises at a time at which a first individual converter (20, 22) is actively actuated, wherein the actuation duration of the first individual converter (20, 22) is adjusted in such a way that the heights of the amplitudes (48, 50) of the voltage of all of the individual converters (20, 22) are balanced by changing the switch-on duration of the first individual converter (20, 22).

7. Arrangement according to Claim 6, which has an RC filter (29) as measurement circuit, said RC filter being connected in parallel with the capacitor (28) and with the resistor (30).

8. Arrangement according to one of Claims 6 to 7, in which the control unit (16) is designed to monitor an operation of the polyphase DC/DC converter (18) and in the process to activate each one of the individual converters (20, 22) by actuating at least one electronic component (24, 26).

## Revendications

1. Procédé pour ajuster un convertisseur de courant continu multiphase (18) qui comprend au moins deux convertisseurs individuels (20, 22) ainsi que, au niveau d'une interface, un condensateur (28) ayant une résistance interne (30), qui sont tous deux montés en série, dans lequel un courant qui passe par le condensateur (28) et la résistance (30) est fourni selon une séquence par un convertisseur individuel (20, 22) respectif, dans lequel une chute de tension se produit au niveau du montage en série et est mesurée, dans lequel la chute résulte de la superposition des courants individuels des convertisseurs individuels (20, 22), dans lequel les convertisseurs individuels (20, 22) sont attaqués l'un après l'autre selon la séquence, dans -lequel chaque- convertisseur individuel (20, 22) est activé pendant une durée d'activation, dans lequel il résulte d'une durée d'activation correspondant à un convertisseur individuel (20, 22) respectif une période pendant laquelle la chute de tension est générée par un flux de courant d'un convertisseur individuel (20, 22) au niveau du condensateur (28) commun à tous les convertisseurs individuels (20, 22), dans lequel une composante alternative de la tension au niveau du condensateur (28), qui résulte de la superposition des courants partiels individuels des convertisseurs individuels (20, 22), est amplifiée et détectée par un amplificateur de mesure (14) qui est monté en parallèle avec le condensateur (28) et la résistance (30), dans lequel une valeur minimale se produit dans une courbe (44) d'une composante alternative de la tension au niveau du condensateur (28) à un moment où un premier convertisseur individuel (20, 22) est attaqué à l'état actif, dans lequel la durée d'attaque du premier convertisseur individuel (20, 22) est adaptée de manière à compenser les hauteurs des amplitudes (48, 50) de la tension de tous les convertisseurs individuels (20, 22) par modification de la durée d'activation du premier transducteur individuel (20, 22).

2. Procédé selon la revendication 1, dans lequel une hauteur d'une amplitude de la tension résultante est mesurée pour chaque convertisseur individuel (20, 22), et dans lequel les hauteurs des amplitudes de tensions de tous les transducteurs individuels (20, 22) sont comparées.

3. Procédé selon la revendication 1, dans lequel, pour au moins un transducteur individuel (20, 22), une valeur d'une durée d'activation est modifiée, de sorte qu'une amplitude de la tension correspondant audit moins un convertisseur individuel (20, 22) est modifiée.

4. Procédé selon la revendication 3, dans lequel, pour un convertisseur individuel (20, 22) dont l'amplitude (48) de la tension présente la valeur la plus élevée, ladite amplitude (48) est réduite par modification de la durée d'activation.

5. Procédé selon l'une des revendications précédentes, qui est mis en œuvre pour un convertisseur de courant continu (18), dans lequel le condensateur (28) est réalisé sous la forme d'un condensateur d'entrée ou d'un condensateur de sortie.

6. Dispositif pour ajuster un convertisseur de courant continu multiphase (18) qui comprend au moins deux convertisseurs individuels (20, 22) ainsi qu'un condensateur (28) et une résistance (30), qui sont tous deux montés en série, dans lequel un courant qui passe par le condensateur (28) et la résistance (30) doit être fourni selon une séquence un convertisseur individuel (20, 22) respectif, dans lequel une chute de tension se produit au niveau du montage en série, laquelle résulte de la superposition des courants individuels des convertisseurs individuels (20, 22), dans lequel le dispositif (12, 13) comporte un appareil de commande (16) et un amplificateur de mesure (14), dans lequel l'appareil de commande (16) est conçu pour mesurer la tension résultante, dans lequel les convertisseurs individuels (20, 22) sont attaqués l'un après l'autre selon la séquence, dans lequel l'amplificateur de mesure (14) est conçu pour être monté en parallèle avec le condensateur (28) et la résistance (30) et est conçu pour amplifier une composante alternative de la tension au niveau du condensateur (28), laquelle résulte de la superposition des courants partiels individuels des convertisseurs individuels (20, 22), dans lequel chaque convertisseur individuel (20, 22) doit être activé pendant une durée d'activation, dans lequel il résulte d'une durée d'activation correspondant à un convertisseur individuel (20, 22) respectif une période pendant laquelle la chute de tension est générée par un flux de courant d'un convertisseur individuel- (20, 22) au niveau du condensateur (28) commun à tous les convertisseurs individuels (20, 22), dans lequel une valeur minimale se produit dans une courbe (44) d'une composante alternative de la tension au niveau du condensateur (28) à un moment où un premier convertisseur individuel (20, 22) est attaqué à l'état actif, dans lequel la durée d'attaque du premier convertisseur individuel (20, 22) est adaptée de manière à compenser les hauteurs des amplitudes (48, 50) de la tension de tous les convertisseurs individuels (20, 22) par modification de la durée d'activation du premier convertisseur individuel (20, 22).

7. Dispositif selon la revendication 6, qui comporte, en tant que circuit de mesure, un filtre RC (29) qui est monté en parallèle avec le condensateur (28) et la résistance (30).

8. Dispositif selon l'une des revendications 6 à 7, dans lequel l'appareil de commande (16) est conçu pour contrôler un fonctionnement du convertisseur de courant continu multiphase (18) et pour ainsi activer respectivement l'un des convertisseurs individuels (20, 22) par attaque d'au moins un composant électronique (24, 26).
